# EUROPÄISCHE PATENTSCHRIFT

(11) **EP 4 012 242 B1**
(45) Veröffentlichungstag und Bekanntmachung des Hinweises auf die Patenterteilung: **01.05.2024**
(21) Anmeldenummer: 21209121.9
(22) Anmeldetag: 18.11.2021
(51) Int. Cl.: F16L 47/32, F16L 47/30

(54) **KUNSTSTOFFROHR-T-VERBINDUNG MIT MINDESTENS EINER ERSTEN UND MINDESTENS EINER WEITEREN KUNSTSTOFFROHRLEITUNG**
PLASTIC PIPE T-JUNCTION WITH AT LEAST ONE FIRST AND AT LEAST ONE ADDITIONAL PLASTIC PIPE
RACCORD EN T DE TUYAU EN MATIÈRE PLASTIQUE POURVU D'AU MOINS UN PREMIER ET D'AU MOINS UN AUTRE TUYAU EN MATIÈRE PLASTIQUE

(30) Priorität: 14.12.2020 DE 102020215851
(43) Veröffentlichungstag der Anmeldung: 15.06.2022
(73) Patentinhaber: ContiTech Techno-Chemie GmbH, 61184 Karben (DE)
(72) Erfinder: Kempf, Dominik, 30165 Hannover (DE)
(74) Vertreter: Continental Corporation

(56) Entgegenhaltungen:
- EP-B1- 2 095 003
- DE-A1- 2 514 827
- DE-U1- 20 021 558
- FR-A- 1 486 484
- US-A1- 2010 116 480

## Beschreibung

Die Erfindung betrifft eine Kunststoffrohr-T-Verbindung mit mindestens einer ersten Rohrleitung und mindestens einer weiteren Kunststoffrohrleitung.

Heutige T- Verbindungen von Heizungs- und Kühlungsleitungen bedienen sich Y- oder T-Stücken aus zumeist Kunststoff, die beispielsweise mit Schnellverbindern an den jeweiligen Enden an Rohrleitungen angeschlossen werden. Dies ist aufwendig, teuer, und weist viele Schnittstellen auf, die Undichtigkeiten bilden können. Außerdem sind derartige Anordnungen starr und benötigen einen nicht unerheblichen Bauraum.

Bei einem typischen Anwendungsfall, nämlich einzelne, im engen Raster stehende Batteriezellen mit Kühlmittel zu versorgen, werden Leitungen angeschlossen, wobei wegen der bauartbedingten Ausführung der Batteriezellen nur eine relativ große Toleranz, beispielsweise von +/-2mm in alle Achsen erforderlich ist. In der US 2009/0023056 A1 ist eine derartige Anordnung gezeigt.

Dieser Toleranzausgleich benötigt weiche, schlauchförmige Zwischen-Gummistücke, die wiederum, um Druckanforderungen standzuhalten, in einem flexiblen Korsett gehalten werden müssen. Das System ist allerdings zusätzlich aufwendig im Hinblick auf die unterschiedlichen Werkstoffe und benötigt erst recht relativ viel Bauraum. Viele Schnellverbinder auf engem Raum sind außerdem kaum prozesssicher zu bewerkstelligen, das Leckagerisiko steigt erheblich. Toleranzen in den Anschlüssen lassen sich damit kaum auffangen.

Die FR 1486484 A offenbart eine Verbindungsschelle für Rohrleitungen mit zwei halbzylindrischen Schalen, die durch eine gemeinsame Gelenkachse verbunden und mit Mitteln zum Verbinden ihrer gegenüberliegenden Enden versehen sind, wobei eine der Schalen mit einem Anschlussstück für ein Abzweigrohr versehen ist.

DE 20021558 U1 zeigt eine Schlauchabzweigmanschette mit zwei gelenkig miteinander verbundenen und um einen Schlauch aufeinander zuklappbaren Manschettenschalen, die miteinander verriegelbar sind, wobei die eine Manschettenschale einen Dorn zum Aufstecken eines Schlauches aufweist, wobei die andere Manschettenschale fluchtend zu dem Dorn eine Öffnung aufweist, durch die eine Rohrhülse hindurch bis in den Dorn hineinsteckbar ist, die quer zu ihrer Längsachse einen Einlass aufweist.

Der Erfindung lag die Aufgabe zugrunde, eine Kunststoff-T-Verbindungder eingangs geschilderten Art zu schaffen, die ohne aufwändige Toleranzausgleichsstücke aus Gummi und ohne separate T-Verbinder auskommt.

Diese Aufgabe wird dadurch gelöst, dass die erste Rohrleitung mindestens eine Bohrung in der Rohrwand aufweist, deren Durchmesser um ein vorbestimmtes Maß größer ist, als der Innendurchmesser der weiteren Rohrleitung und die weitere Rohrleitung an ihrem der ersten Rohrleitung zugeordneten Ende eine Klappmuffe aufweist, wobei die Klappmuffe ein erstes, der weiteren Rohrleitung zugeordnetes sattelförmiges Bauteil aufweist, wobei die weitere Rohrleitung in das sattelförmige Bauteil fluidführend mündet, und die Klappmuffe ein zweites sattelförmiges Bauteil aufweist, wobei das zweite sattelförmige Bauteil klappbar mit dem ersten Bauteil verbunden und zu der Klappmuffe zusammenklappbar ist, wobei die Klappmuffe um die erste Rohrleitung herum zugeklappt ist und einen Durchmesser aufweist, der mit dem Außendurchmesser der ersten Rohrleitung korrespondiert, wobei die Mündung der weiteren Rohrleitung mit der Bohrung in der Rohrwand der ersten Rohrleitung fluchtet.

Dadurch, dass die Bohrung in der ersten Rohrleitung vorbestimmt größer ist, als der Innendurchmesser der weiteren Rohrleitung, sind durch entsprechendes axiales oder rotatorische Verschieben der Klappmuffe auf der ersten Rohrleitung Toleranzen der beiden Rohrleitung zueinander ausgleichbar.

In einer Weiterbildung der Erfindung ist die weitere Rohrleitung mit ihrem der ersten Rohrleitung zugeordneten Ende und das erste Bauteil der Klappmuffe einstückig und stoffschlüssig miteinander verbunden.

Auf diese Weise kann eine Verbindungsvorrichtung zwischen der Klappmuffe und der weiteren Rohrleitung entfallen, was die Montage vereinfacht und das Risiko von Undichtigkeiten minimiert.

In einer Weiterbildung der Erfindung sind die weitere Rohrleitung und die Klappmuffe mittels Spritzgießen in einem Arbeitsgang hergestellt.

Durch diesen Arbeitsgang ist die Herstellung genannten Teile besonders preiswert und sicher.

In einer Weiterbildung der Erfindung sind die beiden sattelförmigen Bauteile der Klappmuffe mit einem Filmscharnier verbunden.

Ein Filmscharnier ist beim Spritzgießen besonders vorteilhaft in einem Arbeitsgang herstellbar.

In einer Weiterbildung der Erfindung weist die Klappmuffe im Bereich um die Mündung der weiteren Rohrleitung im ersten Bauteil der Klappmuffe herum eine der ersten Rohrleitung zugeordnete elastische Dichtung auf.

Durch eine derartige Dichtung ist die ausgleichbare Toleranz etwas vergrößert, was die Montage weiter erleichtert. Außerdem ist dadurch die Dichtigkeit der Verbindung verbessert.

In einer Weiterbildung der Erfindung ist die Dichtung beim Spritzgießen der weiteren Rohrleitung mit der Klappmuffe im 2K-Verfahren mit angespritzt.

Die angespritzte Dichtung vereinfacht die Montierbarkeit der Verbindung weiter, da sie nicht verlierbar oder verschiebbar ist.

Erfindungsgemäß weist die erste Rohrleitung an ihrer Außenfläche eine elastische Umhüllung auf, wobei die Bohrung in der Wand der ersten Rohrleitung auch durch die Umhüllung geht.

Durch die elastische Umhüllung kann eine separate Dichtung entfallen.

In einer Weiterbildung der Erfindung weisen die beiden Bauteile der Klappmuffe an den im zugeklappten Zustand der klappbaren Verbindung gegenüberliegenden und einander zugeordneten Enden einen Schnappverschluss auf.

Der Schnappverschluss sorgt für eine weiter vereinfachte Montage.

In einer Weiterbildung der Erfindung weist die T-Verbindung zwei Verschlussringe auf, die axial verschiebbar auf der ersten Rohrleitung angeordnet und über die jeweils axialen Enden der zugeklappten Klappmuffe schiebbar und in einer vorbestimmten axialen Position auf den beiden Bauteilen der Klappmuffe verklemm- und/oder verrastbar und/oder verklebbar sind.

Durch das Aufschieben der Verschlussringe sind die beiden Bauteile der Klappmuffe radial fest an die erste Rohrleitung anpressbar, was für einen sicheren und dichten Sitz der Verbindung sorgt.

Anhand der Zeichnung wird ein Beispiel der Erfindung näher erläutert. Es zeigt
Fig. 1 eine erste Rohrleitung einer erfindungsgemäßen Kunstoffrohr-T-Verbindung,
Fig. 2 eine Klappmuffe der erfindungsgemäßen Kunststoffrohr-T-Verbindung und
Fig. 3 die fertig montierte Kunststoffrohr-T-Verbindung.

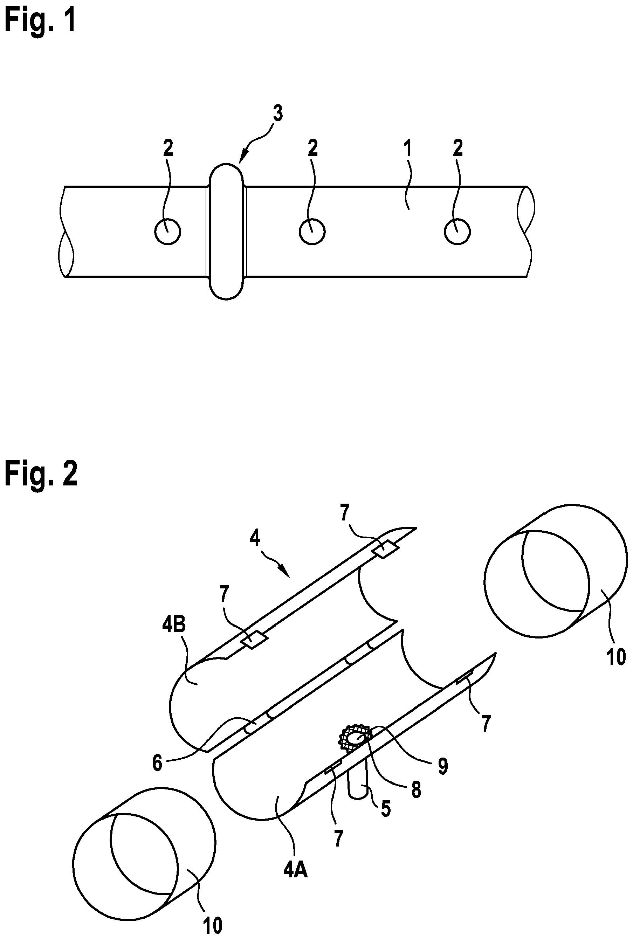

Die Fig. 1 zeigt eine erste Rohrleitung 1 einer hier sonst nicht weiter dargestellten Kunststoffrohr-T-Verbindung. Die erste Rohrleitung weist in ihrer Wand in vorbestimmten axialen Abständen Bohrungen 2 auf. Außerdem weist die Rohrleitung 1 einen ausgebauchten Ringwulst 3 auf, der dazu geeignet ist, bei Bedarf Längenänderungen der Rohrleitung 1 zwischen den Bohrungen 2 zu ermöglichen.

Die Fig. 2 zeigt eine Klappmuffe 4 der erfindungsgemäßen Kunststoffrohr-T-Verbindung mit einer weiteren Rohrleitung 5, die auf hier nicht dargestellte Weise mit einer nicht gezeigten Batteriezelle in Wirkverbindung steht. Die Klappmuffe 4 weist ein erstes Bauteil 4A und ein zweites Bauteil 4B auf, die über ein Filmscharnier 6 miteinander klappbar verbunden sind.

An den dem Filmscharnier 6 abgewandten Seiten der Bauteile 4A und 4B ist ein Schnappverschluss 7 angeordnet, der hier nur symbolisch angedeutet ist. Das Bauteil 4A der Klappmuffe 4 weist eine Bohrung 8 auf, in die die Rohrleitung 5 mündet. Um die Bohrung 8 herum ist innenseitig an dem ersten Bauteil 4A eine Dichtung 9 aus elastomerem Material angeordnet.

Zwei Verschlussringe 10 sind bei zugeklappter Klappmuffe 4 dazu vorgesehen, die beiden Bauteile 4A und 4B sicher in dem dann zum Betrieb vorgesehenen, hier nicht dargestellten Zustand sicher zusammenzuhalten.

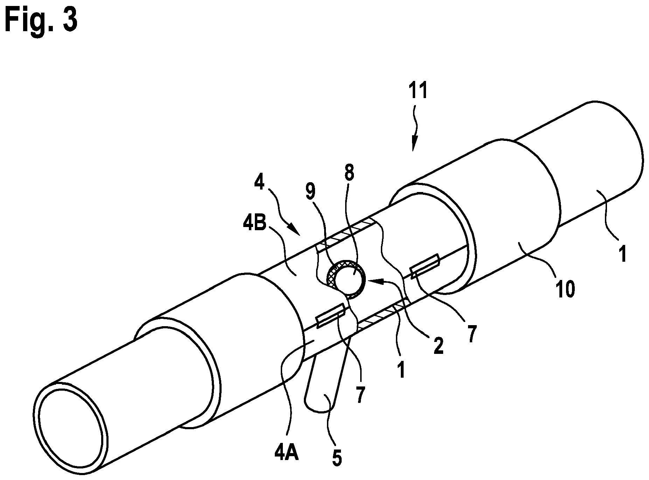

In der Fig. 3 ist die fertig montierte Kunststoffrohr-T-Verbindung 11 mit einem Teilausbruch dargestellt. Die Klappmuffe 4 ist mit ihren beiden Bauteilen 4A und 4B um die Rohrleitung 1 herum zugeklappt und mit dem Schnappverschluss 7 verriegelt. Mündung 8 der Rohrleitung 5 fluchtet in etwa mit der Bohrung 2 der Rohrleitung 1, wobei der Durchmesser der Bohrung 2 um ein vorbestimmtes Maß größer ist als der Durchmesser der Mündung 5. Die Dichtung 9 dichtet die Umgebung der Mündung 8 gegen das Bauteil 4A der Klappmuffe 4 ab.

Die vor der Montage auf die Rohrleitung 1 aufgeschobenen Verschlussringe 10 sind jeweils endseitig auf die zugeklappte Klappmuffe 4 aufgeschoben und auf hier nicht weiter dargestellte Weise in ihrer vorgesehenen Verriegelungsposition verrastet.

Dadurch, dass die Bohrung 2 in der Rohrleitung 1 größer ist als die Mündung 8 im Bauteil 4A, sind Toleranzen in vorbestimmtem Rahmen ausgleichbar.

### Bezugszeichenliste

### (Teil der Beschreibung)

- 1: ErsteRohrleitung
- 2: Bohrungen in der Rohrleitung 1
- 3: Ringwulst der Rohrleitung 1
- 4: Klappmuffe
- 4A: Erstes Bauteil der Klappmuffe 4
- 4B: Zweites Bauteil der Klappmuffe 4
- 5: Weitere Kunstoffrohrleitung
- 6: Filmscharnier
- 7: Schnappverschluss
- 8: Bohrung im Bauteil 4A der Klappmuffe 4
- 9: Dichtung um die Buchung 8
- 10: Verschlussringe
- 11: Kunststoffrohr-T-Verbindung

## Patentansprüche

1. Kunststoffrohr-T-Verbindung (11) mit mindestens einer ersten Rohrleitung (1) und mindestens einer weiteren Kunststoffrohrleitung (5), wobei die erste Rohrleitung (1) mindestens eine Bohrung (2) in der Rohrwand aufweist, deren Durchmesser um ein vorbestimmtes Maß größer ist, als der Innendurchmesser der weiteren Rohrleitung (5) und die weitere Rohrleitung (5) an ihrem der ersten Rohrleitung (1) zugeordneten Ende eine Klappmuffe (4) aufweist, wobei die Klappmuffe (4) ein erstes, der weiteren Rohrleitung (5) zugeordnetes sattelförmiges Bauteil (4A) aufweist, wobei die weitere Rohrleitung (5) in das sattelförmige Bauteil (4A) fluidführend mündet, und die Klappmuffe (4) ein zweites sattelförmiges Bauteil (4B) aufweist, wobei die Klappmuffe (4) um die erste Rohrleitung (1) herum zugeklappt ist und einen Durchmesser aufweist, der mit dem Außendurchmesser der ersten Rohrleitung (1) korrespondiert, wobei die Mündung (8) der weiteren Rohrleitung (5) mit der Bohrung (2) in der Rohrwand der ersten Rohrleitung (1) fluchtet, **dadurch gekennzeichnet, dass** das zweite sattelförmige Bauteil (4B) mittels eines Filmscharniers (6) mit dem ersten Bauteil (4A) verbunden und zu der Klappmuffe (4) zusammenklappbar ist und die erste Rohrleitung (1) an ihrer Außenfläche eine elastische Umhüllung aufweist, wobei die Bohrung (2) in der Wand der ersten Rohrleitung (1) auch durch die Umhüllung geht.

2. Kunststoffrohr-T-Verbindung (11) nach Anspruch 1, **dadurch gekennzeichnet, dass** die weitere Rohrleitung (5) mit ihrem der ersten Rohrleitung (1) zugeordneten Ende und das erste Bauteil (4A) der Klappmuffe (4) einstückig und stoffschlüssig miteinander verbunden ist.

3. Kunststoffrohr-T-Verbindung (11) nach Anspruch 2, **dadurch gekennzeichnet, dass** die weitere Rohrleitung (5) und die Klappmuffe (4) mittels Spritzgießen in einem Arbeitsgang hergestellt sind.

4. Kunststoffrohr-T-Verbindung (11) nach mindestens einem der vorstehenden Ansprüche, **dadurch gekennzeichnet, dass** die Klappmuffe (4) im Bereich um die Mündung (8) der weiteren Rohrleitung (5) im ersten Bauteil (4A) der Klappmuffe (4) herum eine der ersten Rohrleitung (1) zugeordnete elastische Dichtung (9) aufweist.

5. Kunststoffrohr-T-Verbindung (11) nach Anspruch 4, **dadurch gekennzeichnet, dass** die Dichtung (9) beim Spritzgießen der weiteren Rohrleitung (5) mit der Klappmuffe (4) im 2K-Verfahren mit angespritzt ist.

6. Kunststoffrohr-T-Verbindung (11) nach mindestens einem der vorstehenden Ansprüche, **dadurch gekennzeichnet, dass** die beiden Bauteile (4A, 4B) der Klappmuffe (4) an den im zugeklappten Zustand der klappbaren Verbindung (6) gegenüberliegenden und einander zugeordneten Enden einen Schnappverschluss (7) aufweisen.

7. Kunststoffrohr-T-Verbindung (11) nach mindestens einem der vorstehenden Ansprüche, **dadurch gekennzeichnet, dass** die Kunststoffrohr-T-Verbindung (11) zwei Verschlussringe (10) aufweist, die axial verschiebbar auf der ersten Rohrleitung (1) angeordnet und über die jeweils axialen Enden der zugeklappten Klappmuffe (4) schiebbar und in einer vorbestimmten axialen Position auf den beiden Bauteilen (4A, 4B) der Klappmuffe (4) verklemm- und/oder verrastbar und/oder verklebbar sind.

## Claims

1. Plastic pipe T-connection (11) having at least one first pipeline (1) and having at least one further plastic pipeline (5), wherein the first pipeline (1) has at least one bore (2) in the pipe wall, the diameter of which at least one bore is greater than the internal diameter of the further pipeline (5) by a predetermined amount, and, at its end assigned to the first pipeline (1), the further pipeline (5) has a hinged sleeve (4), wherein the hinged sleeve (4) has a first saddle-shaped component (4A) which is assigned to the further pipeline (5), wherein the further pipeline (5) opens out in a fluid-conducting manner into the saddle-shaped component (4A), and the hinged sleeve (4) has a second saddle-shaped component (4B), wherein the hinged sleeve (4) is pivoted closed around the first pipeline (1) and has a diameter which corresponds to the external diameter of the first pipeline (1), wherein the opening (8) of the further pipeline (5) is aligned with the bore (2) in the pipe wall of the first pipeline (1), **characterized in that** the second saddle-shaped component (4B), by means of a film hinge (6), is connected to the first component (4A) and is able to be pivoted together with the latter to form the hinged sleeve (4), and the first pipeline (1) has an elastic encapsulation at its external surface, wherein the bore (2) in the wall of the first pipeline (1) also passes through the enclosure.

2. Plastic pipe T-connection (11) according to Claim 1, **characterized in that** the further pipeline (5), by way of its end assigned to the first pipeline (1), and the first component (4A) of the hinged sleeve (4) are connected to one another in one piece and in a materially bonded manner.

3. Plastic pipe T-connection (11) according to Claim 2, **characterized in that** the further pipeline (5) and the hinged sleeve (4) are produced in one operation by means of injection moulding.

4. Plastic pipe T-connection (11) according to at least one of the preceding claims, **characterized in that**, in the region around the opening (8) of the further pipeline (5) in the first component (4A) of the hinged sleeve (4), the hinged sleeve (4) has an elastic seal (9) which is assigned to the first pipeline (1).

5. Plastic pipe T-connection (11) according to Claim 4, **characterized in that** the seal (9) is also moulded on during the injection moulding of the further pipeline (5) with the hinged sleeve (4) in a two-component process.

6. Plastic pipe T-connection (11) according to at least one of the preceding claims, **characterized in that** the two components (4A, 4B) of the hinged sleeve (4) have a snap-action fastener (7) at the ends which are assigned to one another and which are situated opposite one another in the pivoted-closed state of the pivotable connection (6).

7. Plastic pipe T-connection (11) according to at least one of the preceding claims, **characterized in that** the plastic pipe T-connection (11) has two closure rings (10) which are arranged in an axially displaceable manner on the first pipeline (1) and which are able to be pushed over the respectively axial ends of the pivoted-closed hinged sleeve (4) and which are able to be clamped and/or latched and/or adhesively bonded to the two components (4A, 4B) of the hinged sleeve (4) in a predetermined axial position.

## Revendications

1. Raccord en T pour tube en matière plastique (11) avec au moins une première conduite tubulaire (1) et au moins une autre conduite tubulaire en matière plastique (5), la première conduite tubulaire (1) présentant au moins un alésage (2) dans la paroi tubulaire, dont le diamètre est supérieur d'une mesure prédéterminée au diamètre intérieur de l'autre conduite tubulaire (5) et l'autre conduite tubulaire (5) présentant à son extrémité associée à la première conduite tubulaire (1) un manchon rabattable (4), le manchon rabattable (4) présentant un premier composant en forme de selle (4A) associé à l'autre conduite tubulaire (5), l'autre conduite tubulaire (5) débouchant dans le composant en forme de selle (4A) en guidant le fluide, et le manchon rabattable (4) présentant un deuxième composant en forme de selle (4B), le manchon rabattable (4) étant rabattu autour de la première conduite tubulaire (1) et présentant un diamètre qui correspond au diamètre extérieur de la première conduite tubulaire (1), l'embouchure (8) de l'autre conduite tubulaire (5) étant alignée avec l'alésage (2) dans la paroi tubulaire de la première conduite tubulaire (1), **caractérisé en ce que** le deuxième composant en forme de selle (4B) est relié au premier composant (4A) au moyen d'une charnière à film (6) et peut être replié pour former le manchon rabattable (4), et la première conduite tubulaire (1) présente une enveloppe élastique sur sa surface extérieure, l'alésage (2) dans la paroi de la première conduite tubulaire (1) traversant également l'enveloppe.

2. Raccord en T pour tube en matière plastique (11) selon la revendication 1, **caractérisé en ce que** l'autre conduite tubulaire (5) avec son extrémité associée à la première conduite tubulaire (1) et le premier composant (4A) du manchon rabattable (4) sont reliés entre eux d'un seul tenant et par liaison de matière.

3. Raccord en T pour tube en matière plastique (11) selon la revendication 2, **caractérisé en ce que** l'autre conduite tubulaire (5) et le manchon rabattable (4) sont fabriqués par moulage par injection en une seule opération.

4. Raccord en T pour tube en matière plastique (11) selon au moins l'une quelconque des revendications précédentes, **caractérisé en ce que** le manchon rabattable (4) présente, dans la zone entourant l'embouchure (8) de l'autre conduite tubulaire (5) dans le premier composant (4A) du manchon rabattable (4), un joint d'étanchéité élastique (9) associé à la première conduite tubulaire (1).

5. Raccord en T pour tube en matière plastique (11) selon la revendication 4, **caractérisé en ce que** le joint d'étanchéité (9) est injecté en même temps que le manchon rabattable (4) lors du moulage par injection de l'autre conduite tubulaire (5) dans le procédé à deux composants.

6. Raccord en T pour tube en matière plastique (11) selon au moins l'une quelconque des revendications précédentes, **caractérisé en ce que** les deux composants (4A, 4B) du manchon rabattable (4) présentent un verrouillage par encliquetage (7) aux extrémités opposées et associées l'une à l'autre dans l'état rabattu du raccord rabattable (6).

7. Raccord en T pour tube en matière plastique (11) selon au moins l'une quelconque des revendications précédentes, **caractérisé en ce que** le raccord en T pour tube en matière plastique (11) présente deux bagues de fermeture (10) qui sont agencées de manière à pouvoir coulisser axialement sur la première conduite tubulaire (1) et peuvent être glissées sur les extrémités axiales respectives du manchon rabattable (4) rabattu et peuvent être bloquées et/ou enclenchées et/ou collées dans une position axiale prédéterminée sur les deux composants (4A, 4B) du manchon rabattable (4).
